Europäisches Patentamt

European Patent Office

Office européen des brevets

(19)

(11) Veröffentlichungsnummer: **0 016 902**
**A1**

(12) **EUROPÄISCHE PATENTANMELDUNG**

(21) Anmeldenummer: 80100153.8

(22) Anmeldetag: **14.01.80**

(51) Int. Cl.³: **G 03 B 13/20, G 03 B 19/04**

(30) Priorität: **23.03.79 DE 2911472**

(43) Veröffentlichungstag der Anmeldung: **15.10.80**
Patentblatt 80/21

(84) Benannte Vertragsstaaten: **AT BE CH FR GB IT LU NL SE**

(71) Anmelder: **Rollei-Werke Franke & Heidecke GmbH + Co KG, Salzdahlumer Strasse 196, D-3300 Braunschweig (DE)**

(72) Erfinder: **Rodeck, Hans Jürgen, Über dem Steinbruch 2, D-3301 Erkerode (DE)**

(74) Vertreter: **Pretzell, Hellmut, Dipl.-Ing., Salzdahlumer Strasse 196, D-3300 Braunschweig (DE)**

(54) Sucherkamera, insbesondere Klein-Kamera.

(57) Es wird eine Sucherkamera, insbesondere eine Klein-Kamera, mit einem Aufnahmeobjektiv, dessen Linsen zur Fokussierung zumindest teilweise längs der optischen Achse verschiebbar angeordnet sind, und mit einem Meßsucher mit Zwischenbildern für einen Sucher- und einen Meßstrahlengang angegeben, der ein für beide Strahlengänge gemeinsames Okular zur Betrachtung der Zwischenbilder aufweist. Zum Zwecke des konstruktiv und fertigungstechnisch sehr einfachen Aufbaus des Meßsuchers, der auch in Verbindung mit Weitwinkel- und Televorsätzen sowie anderen Vorsatzlinsen noch einwandfrei arbeitet, ist der Durchmesser der verschiebbaren Linsen (16) über den wirksamen Öffnungsdurchmesser des Aufnahmeobjektivs (10) hinaus zur Gewinnung einer freien Randzone (24) vergrössert. Der Meßstrahlengang (20) weist zwei an einem optischen Körper (23), wie Spiegel-, Prismen-, Dodinkeilpaar, Teilerspiegel oder dgl., vereinigte Teilstrahlengänge (21, 22) auf, die durch die Randzone (24) hindurchgeführt sind.

**Patentanwälte**

| Kratzsch | Mülbergerstr. 65 | Dipl.-Ing. Volkhard Kratzsch |
| Schulz | D-7300 Esslingen | Dipl.-Ing. Klaus Schulz |

| Telefon Stuttgart (07 11) 35 99 92 | Deutsche Bank Esslingen 210 906 |
| cable «krapatent» esslingenneckar | Postscheckamt Stuttgart 100 04-701 |

0016902

Rollei-Werke

Franke & Heidecke

3300 Braunschweig

23. Januar 1979

Anwaltsakte 2694

Sucherkamera, insbesondere Klein-Kamera

Die Erfindung betrifft eine Sucherkamera, insbesondere eine Klein-Kamera, der im Oberbegriff des Anspruchs 1 definierten Gattung.

Bei einer bekannten Kamera dieser Art sind Sucher- und Meßstrahlengang getrennt an zwei verschiedenen Stellen durch das Kameragehäuse hindurchgeführt. Der Sucherstrahlengang verläuft über ein Pentadachkantprisma zu einer Frontlinse und von dort über ein 90°-Prisma zu einem Prismenwürfel. Durch entsprechende Ausbildung des Prismenwürfels und die Anordnung von Hohlspiegeln gelangt der Sucherstrahlengang zu einer Zwischenbildebene und von dort weiter über einen weiteren Hohlspiegel zu dem Okular. Der Meßstrahlengang verläuft über ein Pentadachkantprisma durch das Meßobjektiv ebenfalls zu der Zwischenbildebene, in welcher ein Meßfeldspiegel angeordnet ist, und von dort ebenfalls über den Hohlspiegel zum Okular. Das Meßobjektiv ist in Abhängigkeit von der Verstellung des Aufnahmeobjektivs senkrecht zur optischen Achse verschiebbar, so daß eine Schnittbildentfernungsmessung durchgeführt werden kann.

Bei dieser bekannten Sucherkamera verursacht die Beweglichkeit des Meßobjektivs und dessen Ankopplung an die Verstellung des Aufnahmeobjektivs einen erheblichen fertigungstechnischen Aufwand, der sich vor allem in einer erschwerten Montage und in der Notwendigkeit der individuellen Justierung einer jeden Kamera zeigt. Die damit verbundenen erheblichen Lohnkosten erhöhen die Fertigungskosten für eine Sucherkamera mit einer solchen Entfernungsmeßeinrichtung im Vergleich zu der gleichen Kamera ohne diese Entfernungsmeßeinrichtung in unverhältnismäßiger Weise. Außerdem ist eine solche Entfernungsmeßeinrichtung dann nicht mehr zu gebrauchen, wenn an das Aufnahmeobjektiv Weitwinkel- oder Televorsätze sowie andere Vorsatzlinsen angesetzt werden.

Der Erfindung liegt die Aufgabe zugrunde, eine Sucherkamera der eingangs genannten Art zu schaffen, bei welcher der Meßsucher konstruktiv und fertigungstechnisch sehr einfach aufgebaut und damit preiswert zu fertigen ist und bei welcher der Meßsucher auch in Verbindung mit Weitwinkel- und Televorsätzen sowie anderen Vorsatzlinsen noch einwandfrei arbeitet.

Diese Aufgabe ist bei einer Sucherkamera der im Oberbegriff des Anspruchs 1 definierten Gattung erfindungsgemäß durch die Merkmale im Kennzeichnungsteil des Anspruchs 1 gelöst.

Bei der erfindungsgemäßen Kamera enthält der Meßsucher keinerlei bewegliche Teile. Eine Anpassung der Verstellcharakteristiken von Aufnahmeobjektiv und Sucherobjektiv, wie sie bei der bekannten Sucherkamera erforderlich ist, entfällt hier vollständig. Ebenso entfällt das mechanische Übertragungsgetriebe vom Aufnahmeobjektiv zum Sucherobjektiv. Der Meßsucher ist konstruktiv insgesamt einfacher aufgebaut. Die Montage- und Justierkosten sind damit erheblich gesenkt. Da der Meßstrahlengang durch den verstellbaren Teil des Objektivs hindurchgeht, funktioniert der Entfernungsmesser auch bei an das Aufnahmeobjektiv angesetzten Weitwinkel- oder Televorsätzen oder weiteren Vorsatzlinsen. Infolge des Hindurchführens der beiden Teilstrahlengänge des Meßstrahlengangs an zwei am Aufnahmeobjektiv diametral gegenüberliegenden Stellen der Randzone wird gleichzeitig die richtige Zuordnung der beiden von den Teilstrahlengängen erzeugten Teilmeßbilder sichergestellt. Zusätzliche optische Elemente zur Herstellung der richtigen Seitenlage werden damit eingespart.

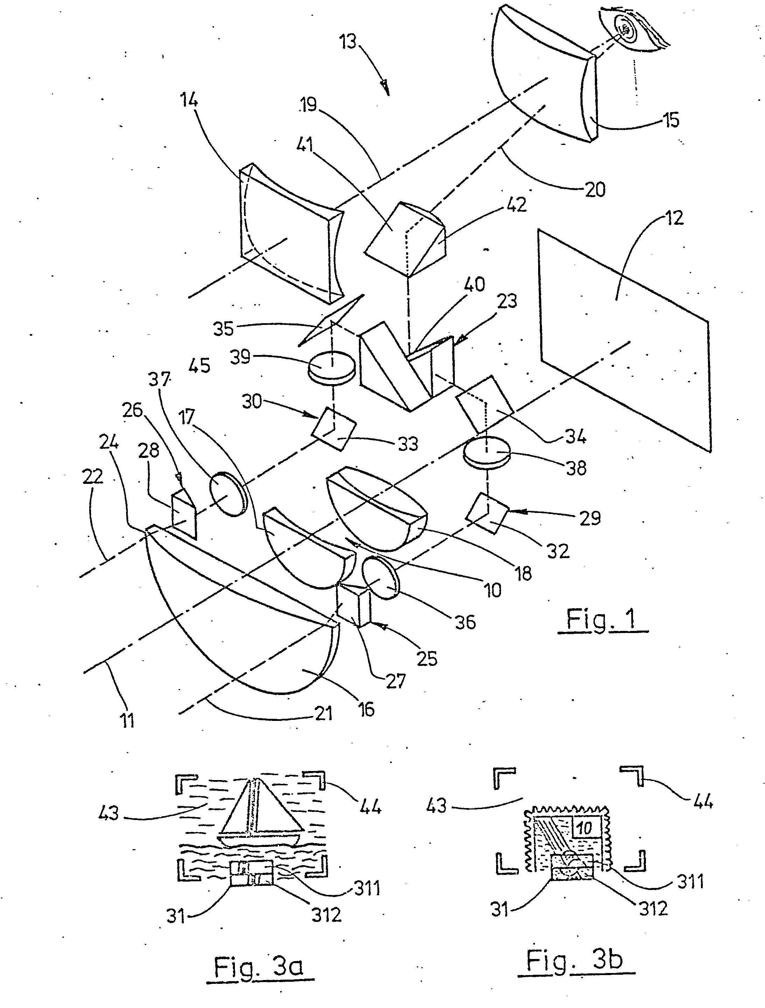

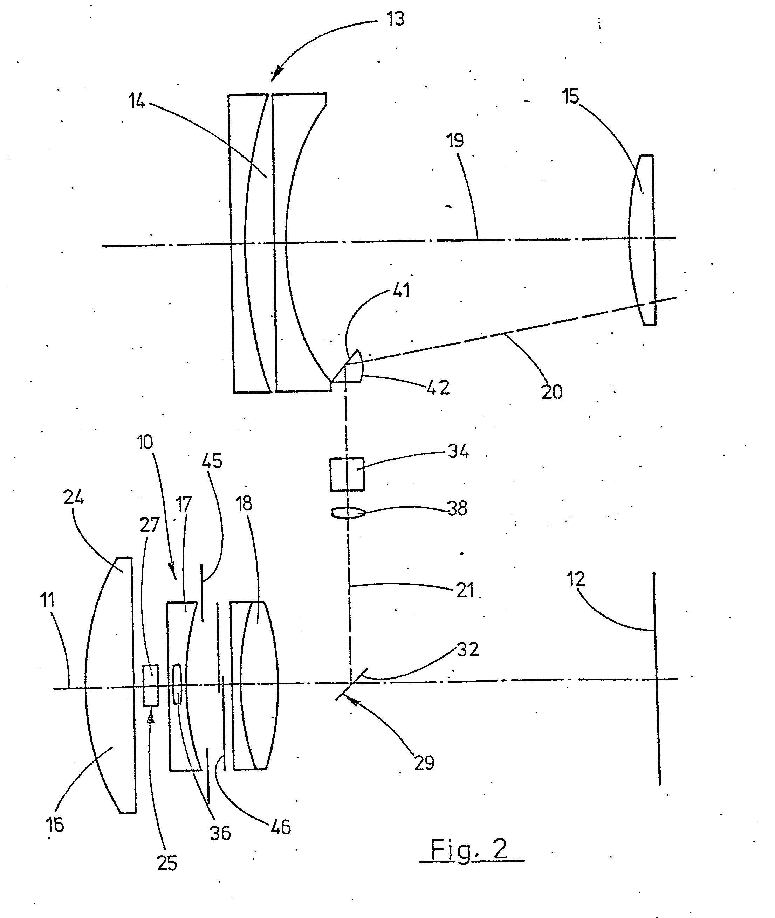

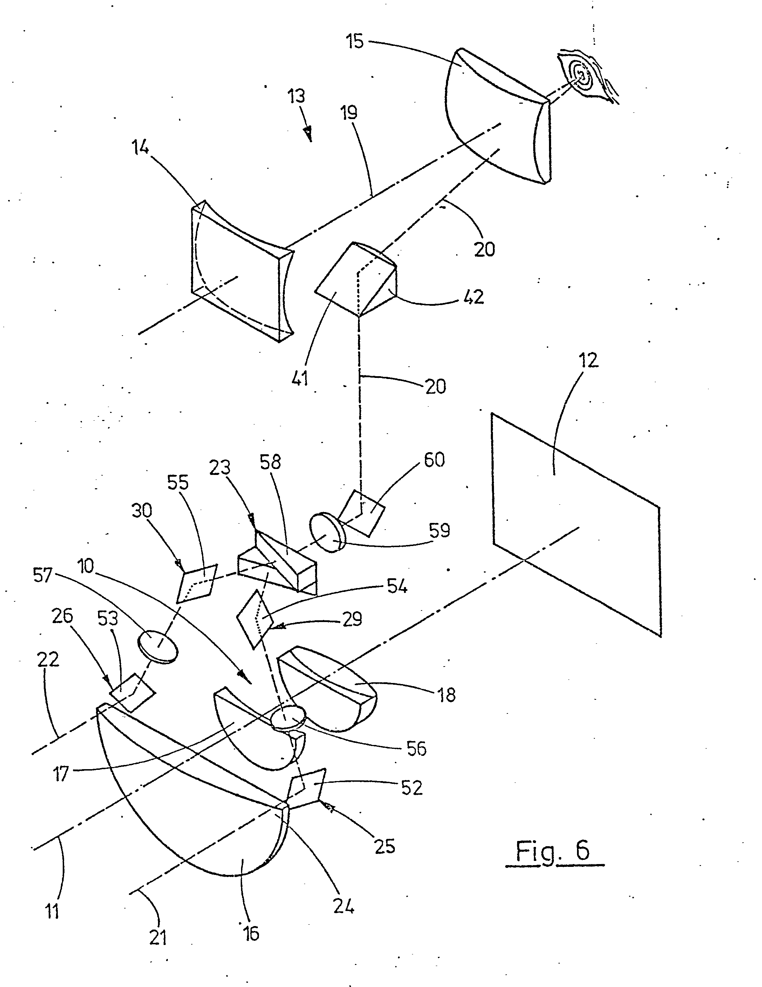

Bei der erfindungsgemäßen Sucherkamera kann der bei Nahaufnahmen im Sucher üblicherweise auftretende Parallaxenfehler mit Hilfe des Meßfeldes, das parallaxfrei ist, kompensiert werden. Die Kamera ist lediglich so einzustellen, daß sich das Zentrum des Aufnahmegegenstands genau in dem im Sucher sichtbaren Meßfeld befindet. Dann ist automatisch der Aufnahmegegenstand mittig im Bildfenster in der Bildfensterebene abgebildet (vgl. hierzu Fig. 3b und 5b und die dazugehörige Beschreibung).

Weitere Ausführungsformen der Erfindung mit erfindungswesentlichen Ausgestaltungen und Weiterbildungen sind Gegenstand der Unteransprüche, auf die hier ausdrücklich Bezug genommen wird.

Dabei wird insbesondere auf die vorteilhafte Ausführungsform der Erfindung gemäß Anspruch 12 verwiesen. Diese Vereinigung von Bildstrahlengang ermöglicht, die Kamera etwas kleiner zu bauen. Hierbei entsteht eine Art SLR-Kamera mit völlig parallaxfreiem Sucherbild.

Eine besonders vorteilhafte Ausführungsform der Erfindung ergibt sich auch aus Anspruch 15. Bei einem Objektiv mit Frontlinsenfokusierung ist der erzielbare Rationalisierungseffekt am größten, da hier nur die Frontlinse oder die mit der Frontlinse zu einem axial verschiebbaren Verbund vereinigten Linsen im Durchmesser vergrößert werden müssen. Der erforderliche größere Materialeinsatz für die Linsen und der erforderliche Bauraum sind zur Erzielung der erfindungsgemäßen Vorteile hier minimal. Beidseits des übrigen Objektivs bleibt auch genügend freier Raum, um die in den Teilstrahlengängen angeordneten optischen Bauelemente unterzubringen.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen. Hierdurch haben jedoch alle diese Anspruchsmerkmale als an dieser Stelle ausdrücklich und erfindungswesentlich offenbart zu gelten.

Die Erfindung ist anhand von in der Zeichnung schematisch dargestellten Ausführungsbeispielen im folgenden näher beschrieben. Es zeigen:

Fig. 1      eine perspektivische Ansicht einer Kamera bei entferntem Gehäuse gemäß einem ersten Ausführungsbeispiel,

Fig. 2      eine Seitenansicht der Kamera in Fig. 1,

Fig. 3      im Kamerasucher der Kamera gemäß Fig. 1 und 2 sichtbares Sucher- und Meßbild bei Normalaufnahme (Fig. 3a) und Nahaufnahme (Fig. 3b),

Fig. 4        eine Seitenansicht der Sucherkamera bei entferntem Gehäuse
gemäß einem zweiten Ausführungsbeispiel,

Fig. 5        im Kamerasucher der Kamera gemäß

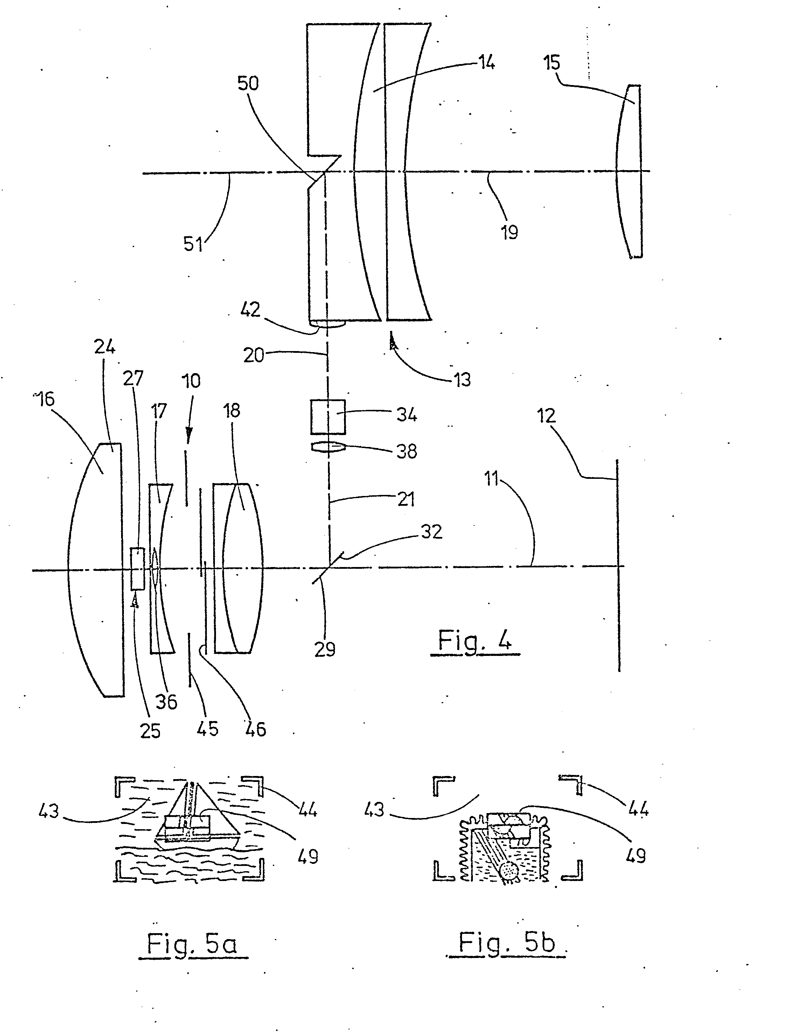

Fig. 4 sichtbares Sucher- und
Meßbild bei Normalaufnahme
(Fig. 5a) und Nahaufnahme
(Fig. 5b),

Fig. 6        eine perspektivische Ansicht
einer Sucherkamera bei entferntem Gehäuse gemäß einem dritten
Ausführungsbeispiel,

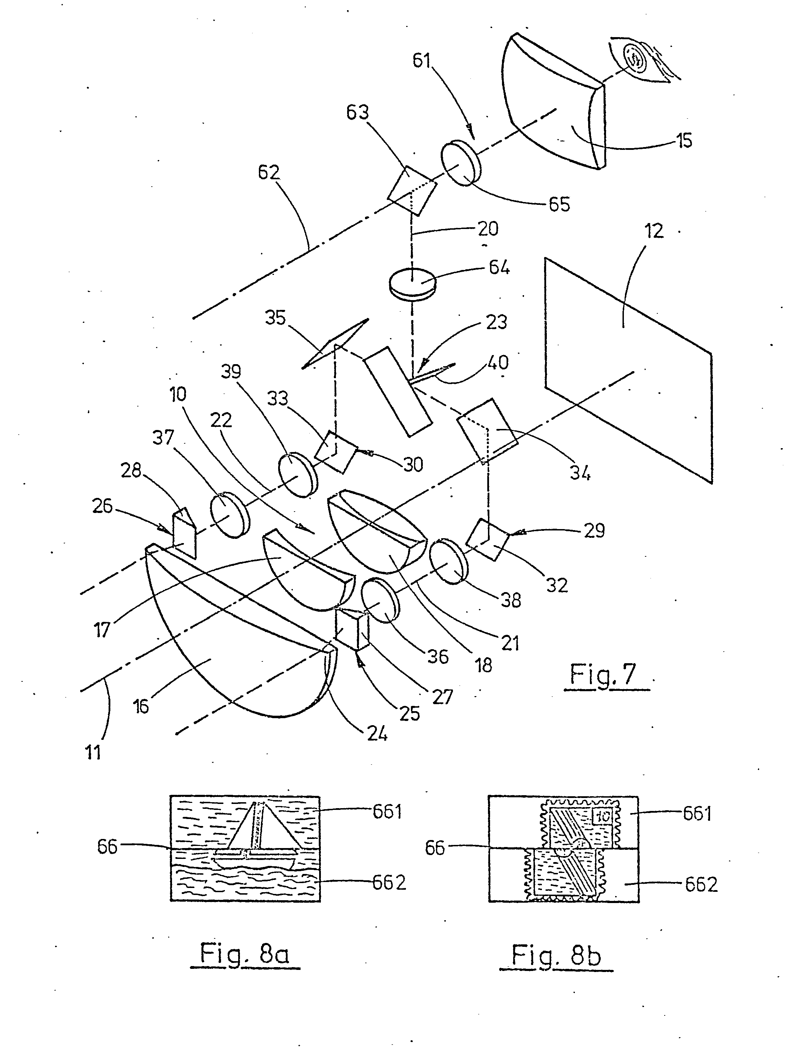

Fig. 7        eine perspektivische Ansicht
einer Sucherkamera bei entferntem
Gehäuse gemäß einem vierten Ausführungsbeispiel,

Fig. 8        im Kamerasucher der Kamera gemäß
Fig. 7 sichtbares Sucherbild bei
Normalaufnahme (Fig. 8a) und
Nahaufnahme (Fig. 8b).

Von der in Fig. 1 dargestellten Sucherkamera ist geschnitten
das Aufnahmeobjektiv 10, die mit dem Aufnahmeobjektiv 10 in
der optischen Achse 11 ausgerichtete Bildebene 12 (schematisch
angedeutet) und der Meßsucher 13 mit Sucherobjektiv 14 oder Sucherfrontlinse
und Okular 15 zu sehen. Das hier gezeigte Aufnahmeobjektiv 10
ist ein Tessar-Typ mit Frontlinsenfokussierung. Von dem dreigliedrigen Aufnahmeobjektiv 10 ist die Frontlinse 16 zum Zwecke
der Fokussierung längs der optischen Achse 11 verschiebbar.

Die beiden anderen Linsen 17 und 18 stehen relativ zur Bildebene 12 räumlich fest.

Im Meßsucher 13 sind zwei Strahlengänge vorhanden, und zwar
der Sucherstrahlengang 19 und der Meßstrahlengang 20, in
Fig. 1 jeweils durch strichlinierte Linien symbolisiert.
Sowohl im Sucher- als auch im Meßstrahlengang 19, 20 erfolgen Zwischenabbildungen, die durch das für beide Strahlengänge gemeinsame Okular 15 betrachtet werden. Die Zwischenbilder sind hier nicht dargestellt. Der Meßstrahlengang 20
weist zwei Teilstrahlengänge 21, 22 auf, die an einem optischen Körper 23 vereinigt sind. Zur Schnittbildvereinigung
der beiden Teilstrahlengänge kann der optische Körper 23
ein Spiegelpaar, ein Prismenpaar oder ein Dodinkeilpaar aufweisen. Zur Mischbildvereinigung kann der optische Körper 23
als Teilerspiegel ausgebildet sein.

Der Durchmesser der Frontlinse 16 ist über den wirksamen
Öffnungsdurchmesser des Aufnahmeobjektivs 10 hinaus vergrößert. Dadurch wird zwischen dem hier nicht dargestellten
Objektivtubus und dem wirksamen Öffnungsdurchmesser des Objektivs in der Frontlinse 16 eine freie Randzone 24 gewonnen, die
sich kreisringförmig an der Peripherie der Frontlinse 16 erstreckt. Durch diese Randzone 24 sind die beiden Teilstrahlengänge 21 und 22 des Meßstrahlengangs 20 hindurchgeführt. Die
Stellen, an denen die beiden Teilstrahlengänge 21, 22 durch
die Randzone 24 der Frontlinse 16 hindurchtreten, liegen
am Aufnahmeobjektiv 10 vorzugsweise diametral einander gegenüber. Hierdurch haben die von den beiden Teilstrahlen erzeugten Teilbilder die seitenrichtige Lage zueinander. Zusätzliche optische Mittel zur Herstellung dieser richtigen
Seitenlage sind überflüssig.

Die beiden Teilstrahlengänge 21, 22 sind symmetrisch aufgebaut. In jedem Teilstrahlengang 21, 22 befindet sich unmittelbar an der Randzone 24 der Frontlinse 16 mindestens ein optisches Ab- oder Umlenkelement 25, 26. Bei der Kamera gemäß Fig. 1 sind diese optischen Ab- oder Umlenkelemente als Ablenkkeile 27, 28 ausgebildet, die so ausgerichtet sind, daß der Teilstrahlengang 21 bzw. 22 auf der von der Randzone 24 abgekehrten Seite des Ablenkkeils 27, 28 im wesentlichen parallel zur optischen Achse 11 verläuft. In jedem der Teilstrahlengänge 21, 22 sind weitere optische Ab- und/oder Umlenkelemente 29, 30 derart angeordnet, daß ein seitenrichtiges Meßbild entsteht. Dieses Meßbild ist mittels des Okulars 15 im Meßsucher 13 als Meßfeld 31 (Fig. 3a) zu sehen. Bei der Kamera gemäß Fig. 1 weisen diese weiteren optischen Ab- und/oder Umlenkelemente 29, 30 jeweils zwei Umlenkspiegel 32, 34 bzw. 33, 35 auf, deren Umlenkrichtungen zueinander im wesentlichen rechtwinklig ausgerichtet sind. Zwischen dem Ablenkkeil 27 bzw. 28 und dem einen Umlenkspiegel 32 bzw. 33 ist jeweils eine Linse oder Relais-Linse 36 bzw. 37 angeordnet. Eine solche Relais-Linse 36 ist ein Umkehrobjektiv, das die Zwischenbilder der beiden Teilstrahlengänge 21, 22 scharf abbildet. Zwischen den beiden Umlenkspiegeln 32 und 34 bzw. 33 und 35 eines jeden Teilstrahlenganges 21, 22 ist jeweils noch eine weitere Relais-Linse 38 bzw. 39 angeordnet. In beiden Teilstrahlengängen 21, 22 ist jeweils dem letzten Umlenkspiegel 34 bzw. 35 der optische Körper 23 nachgeordnet. Bei der Kamera gemäß Fig. 1 ist dieser optische Körper 23 als Spiegelpaar oder Prismenpaar 40 ausgebildet, wie sie z.B. auch bei einer Spiegelreflexkamera zur Schnittbildvereinigung bekannt sind. Zwischen dem optischen Körper 23 bzw. dem Spiegel- oder Prismenpaar 40 und dem Okular 15 ist ein die Lage des Meßfelds 31 im Sucher bestimmender Umlenkspiegel 41 und eine Linse 42 angeordnet, die zu einer Baueinheit vereinigt sind. Wie besonders aus Fig. 2 zu erkennen ist, ist die Umlenkspiegel-Linsen-Kombination 41, 42 am unteren Rand des Sucherobjektivs 14 angeordnet, so daß, wie Fig. 3 zeigt, das Meßbild oder Meßfeld 31 am unteren Rand im Sucherbild 43 zu sehen ist. Ein im Sucherbild 43 sichtbarer, den Bildausschnitt begrenzender Sucherrahmen ist mit 44 bezeichnet.

Infolge der Schnittbildvereinigung der beiden Teilstrahlengänge 21 und 22 mittels des Spiegel- oder Prismenpaares 40 besteht das mittels des Okulars 15 sichtbare Meßbild oder Meßfeld 31 aus zwei Bildhälften 311 und 312. Die obere Meßfeldhälfte 311 wird über den Teilstrahlengang 21 und die untere Meßfeldhälfte 312 von dem Teilstrahlengang 22 erzeugt. Beide Teilstrahlengänge sind so aufeinander abgestimmt, daß beispielsweise bei Einstellung des Aufnahmeobjektivs 10, bzw. dessen Frontlinse 16, auf ein unendlich entferntes Objekt die beiden Meßfeldhälften 311 und 312 ein einheitliches, ineinander übergehendes Meßbild ergibt. Im Meßfeld 31 ist dabei in etwa das Zentrum des Sucherbilds 43 ausschnittsweise zu sehen (vgl. Fig. 3).

Wird nunmehr das Aufnahmeobjektiv 10 bzw. die Frontlinse 16 auf eine kürzere Entfernung eingestellt, so werden die Lichtstrahlen in den Teilstrahlengängen 21 und 22 so abgelenkt, daß die obere und untere Meßfeldhälfte 311 bzw. 312 gegeneinander versetzt sind (vgl. z.B. in Fig. 3a den im Meßfeld 31 zu sehenden Mast des Schiffes, dessen obere und untere Hälfte gegeneinander versetzt sind). Wie bei einer Spiegelreflexkamera mit Schnittbildentfernungsmesser kann nunmehr das Aufnahmeobjektiv 10 so verstellt werden, bis die beiden Meßfeldhälften 311 und 312 wieder miteinander fluchten (der Segelmast in Fig. 3a also eine durchgehende Linie bildet). Das Aufnahmeobjektiv 10 ist damit exakt fokussiert.

Bei Sucherkameras tritt üblicherweise infolge der gegeneinander parallel versetzten Achsen von Meßsucher 13 und Aufnahmeobjektiv 10 ein Parallaxenfehler auf, der bei extremen Nahaufnahmen dazu führt, daß der im Sucherbild 43 zu sehende Bildausschnitt nicht mehr mit dem tatsächlich vom Aufnahmeobjektiv 10 in der Bildebene 12 abgebildeten Bildausschnitt übereinstimmt. Bei der vorstehend beschriebenen Kamera kann dieser Parallaxenfehler in einfacher Weise ausgeglichen werden. Hierzu ist lediglich die Kamera bei der Wahl des Bildausschnittes so auszurichten, daß das Zentrum des gewählten Bildausschnitts genau im Meßfeld 31 erscheint (hierzu Fig. 3b). Im Sucherbild 43 ist zwar dann das Aufnahmeobjekt, hier eine Briefmarke, nur teilweise zu sehen, bei dem tatsächlich belichteten Film liegt aber diese Briefmarke dann genau mittig ausgerichtet im Bild. Auch hier kann eine exakte Fokussierung mittels des Meßfeldes 31 erfolgen.

In Fig. 2      sind noch mit 45 die Kamerablende und mit 46 der Kameraverschluß      angedeutet. Die Kamerablende 45 muß selbstverständlich so konstruiert sein, daß bei voller Blendenöffnung die beiden durch die Frontlinse 16 hindurchgehenden Teilstrahlengänge 21 und 22 von der Blende nicht abgedeckt werden.

Die Kamera gemäß Fig. 4 stimmt mit der vorstehend beschriebenen Kamera weitgehend überein, so daß hier gleiche Bauteile mit gleichen Bezugszeichen versehen sind. Der einzige Unterschied besteht in der Anordnung des dem optischen Körper 23 im Meßstrahlengang 20 nachgeordneten Umlenkspiegels, hier mit 50 bezeichnet. Der Umlenkspiegel 50 ist nicht - wie der Umlenkspiegel 41 - am unteren Rand des Sucherobjektivs 14, sondern in der Sucherachse 51 angeordnet. Dadurch liegt das im Meßsucher 13 sichtbare Meßbild oder Meßfeld 31 im Zentrum des Sucherbilds 43 (Fig. 5).

Bei der Kamera gemäß Fig. 6 erfolgt aus Platzgründen die
Führung der Teilstrahlengänge 21 und 22 hinter der Frontlinse 16 anders als bei der Kamera gemäß Fig. 1. Soweit
jedoch gleiche Bauteile übereinstimmen, sind diese auch mit
den gleichen Bezugszeichen versehen.

Die optischen Ab- oder Umlenkelemente 25, 26, die in jedem
Teilstrahlengang 21, 22 unmittelbar an der Randzone 24 der
Frontlinse 16 angeordnet sind, sind hier als Umlenkspiegel
52, 53 ausgebildet. Als weitere optische Ab- und/oder Umlenkelemente 29 bzw. 30 sind zwei weitere Umlenkspiegel 54 und
55 vorgesehen. Jeweils ein Umlenkspiegel 54 bzw. 55 ist
zwischen dem optischen Körper 23 und einem der vorgenannten
ersten Umlenkspiegel 51 bzw. 52 angeordnet. Zwischen den
Umlenkspiegeln 53 und 55 bzw. 52 und 54 ist in jedem Teilstrahlengang 21 bzw. 22 eine Relais-Linse 56 bzw. 57 angeordnet. Der optische Körper 23 weist ein Dodinkeilpaar 58
auf. Mittels dieses Dodinkeilpaares 58 werden, ebenso wie
bei der Kamera gemäß Fig. 1, die beiden Teilstrahlengänge 21
und 22 zu dem Meßstrahlengang 20 vereinigt. Im Meßstrahlengang 20 ist dem Dodinkeilpaar 58 eine Relais-Linse 59 und ein
weiterer Umlenkspiegel 60 nachgeordnet. Wie auch bei der
Kamera gemäß Fig. 1 ist eine Umlenkspiegel-Linsen-Kombination 41, 42 am unteren Rand des Sucherobjektivs 14 angeordnet, so daß der Meßstrahlengang 20 ein Meßfeld 31 erzeugt,
das im Sucher 43, genau wie bei der Kamera gemäß Fig. 1, am
unteren Rand des Sucherbilds 43 liegt (identisch Fig. 3).
Im übrigen stimmen der weitere Aufbau und die gesamte Funktionsweise mit der Kamera gemäß Fig. 1 und 2 überein.

Bei der Kamera gemäß Fig. 7 ist der Bildstrahlengang mit
dem Meßstrahlengang 20 vereinigt, so daß hier der Meßsucher 61

wie bei einer einäugigen Spiegelreflexkamera (SLR-Kamera)
aufgebaut ist. Der Sucherstrahlengang geht also ebenfalls
durch das Aufnahmeobjektiv 10. Soweit Bauteile mit den Bauteilen der beschriebenen Kamera gemäß Fig. 1 übereinstimmen,
sind diese mit den gleichen Bezugszeichen versehen.

Ebenso wie bei der Kamera gemäß Fig. 1 ist hinter der Randzone 24 der Frontlinse 16 das optische-Ab- oder Umlenkelement
25 bzw. 26 in jedem Teilstrahlengang 21 bzw. 22 als Ablenkkeil 27 bzw. 28 ausgebildet. Ebenso weisen die weiteren
optischen Ab- und/oder Umlenkelemente 29 bzw. 30 in jedem
Teilstrahlengang 21 bzw. 22 die beiden Umlenkspiegel 32 und
34 bzw. 33 und 35 auf. Die Relais-Linsen 36 und 37 bzw. 38
und 39 sind hier zwischen dem Umlenkkeil 27 bzw. 28 und dem
ersten Umlenkspiegel 32 bzw. 33 angeordnet. Mittels des als
Spiegel- oder Prismenpaar 40 ausgebildeten optischen Körpers
23 erfolgt hier ebenso die Schnittbildvereinigung der beiden
Teilstrahlengänge 21, 22. Zwischen dem optischen Körper 23
und dem Okular 15 ist im Sucher- und Meßstrahlengang 20 ein
Umlenkspiegel 63 angeordnet, der in der Okularachse 62 liegt.
Zwischen dem optischen Körper 23 und dem Umlenkspiegel 63 und diesem
und dem Okular 15 ist jeweils eine Relais-Linse 64 bzw. 65
angeordnet. Ein Sucherobjektiv, wie es bei der Kamera gemäß
Fig. 1 mit 14 bezeichnet ist, fehlt hier.

In Fig. 8 ist das Sucherbild 66 der Kamera gemäß Fig. 7 dargestellt, wenn das Aufnahmeobjektiv 10 nicht auf die richtige Entfernung fokussiert ist. Da der Sucherstrahlengang
und auch der Meßstrahlengang 20 zusammenfallen, sind das
Meßfeld, wie in Fig. 1 mit 31 bezeichnet, und das Sucherbild
66 identisch. Das Sucherbild 66 weist eine obere Bildhälfte
661 und eine untere Bildhälfte 662 auf. Zum exakten Fokussieren ist das Aufnahmeobjektiv 10 bzw. dessen Frontlinse 16
so lange in Richtung der optischen Achse 11 zu verschieben,

bis die beiden Bildhälften 661 und 662 ein einheitliches
Bild ohne jeglichen Versatz ergeben. Ein Parallaxenfehler
bei Nahaufnahmen tritt nicht auf (vgl. die beiden Sucherbilder 66 in Fig. 8a und Fig. 8b für Normal- und Nahaufnahme).

Die erfindungsgemäße Kamera ist nicht auf die vorstehend
beschriebenen Ausführungsbeispiele beschränkt. So kann das
Aufnahmeobjektiv 10 ebenso eine Gesamtverstellung aufweisen,
bei welcher das Aufnahmeobjektiv 10 - und nicht nur die
Frontlinse 16 - insgesamt zur Fokussierung längs der optischen Achse 11 verschoben wird. In diesem Fall muß das gesamte Linsensystem des Aufnahmeobjektivs 10 im Durchmesser
über den wirksamen Öffnungsdurchmesser des Aufnahmeobjektivs 10 hinaus vergrößert werden. Die beiden Teilstrahlengänge 20, 21 sind dann durch das gesamte Aufnahmeobjektiv
10 zu führen.

Wie bereits erwähnt, können die beiden Teilstrahlengänge 21,
22 an beliebigen Stellen der Randzone 24 im Aufnahmeobjektiv
10 hindurchgeführt werden. Bei der diametralen Anordnung
der durch das Aufnahmeobjektiv 10 hindurchtretenden Teilstrahlengänge 20, 21 wird aber bereits eine seitenrichtige
Zuordnung der beiden Meßfeldhälften 311 und 312 bzw. Sucherbildhälften 661 und 662 erreicht, ohne daß es zusätzlicher
optischer Elemente bedarf.

0016902

**Patentanwälte**

| **Kratzsch** | Mülbergerstr. 65 | Dipl.-Ing. Volkhard Kratzsch |
| **Schulz** | D-7300 Esslingen | Dipl.-Ing. Klaus Schulz |

| Telefon Stuttgart (07 11) 35 99 92 | Deutsche Bank Esslingen 210 906 |
| cable «krapatent» esslingenneckar | Postscheckamt Stuttgart 100 04-701 |

Rollei-Werke                          23. Januar 1979

Franke & Heidecke

3300 Braunschweig                     Anwaltsakte 2694

Patentansprüche

1. Sucherkamera, insbesondere Klein-Kamera, mit einem Aufnahmeobjektiv, dessen Linsen zur Fokussierung zumindest teilweise längs der optischen Achse verschiebbar angeordnet sind, und mit einem Meßsucher mit Zwischenbildern für einen Sucher- und einen Meßstrahlengang, der ein für beide Strahlengänge gemeinsames Okular zur Betrachtung der Zwischenbilder auf- weist, d a d u r c h   g e k e n n z e i c h n e t , daß der Durchmesser der verschiebbaren Linsen (16) über den wirksamen Öffnungsdurchmesser des Aufnahmeobjektivs (10) hinaus zur Gewinnung einer freien Randzone (24) vergrößert ist und daß der Meßstrahlengang (20) zwei an einem optischen Körper (23), wie Spiegelpaar, Prismenpaar, Dodinkeilpaar, Teilerspiegel od. dgl., vereinigte Teilstrahlengänge (21, 22) aufweist, die, vorzugsweise an zwei diametral gegenüberliegenden Stellen, durch die Randzone (24) hindurchgeführt sind.

2. Kamera nach Anspruch 1, d a d u r c h   g e k e n n - z e i c h n e t , daß in jedem Teilstrahlengang (21, 22) unmittelbar an der Randzone (24) der im Bildstrahlengang letzten der verschiebbaren Linsen (16) mindestens ein optisches Ab- oder Umlenkelement (25, 26) angeordnet ist.

3. Kamera nach Anspruch 2, d a d u r c h g e k e n n - z e i c h n e t , daß in jedem Teilstrahlengang (21, 22) weitere optische Ab- und/oder Umlenkelemente (29, 30) derart angeordnet sind, daß ein seitenrichtiges Meßbild entsteht.

4. Kamera nach Anspruch 2 oder 3, d a d u r c h g e - k e n n z e i c h n e t , daß das an der Randzone (24) angeordnete Ablenkelement (25, 26) als Ablenkkeil (27, 28) ausgebildet ist, der so ausgerichtet ist, daß der Teilstrahlengang (21, 22) auf der von der Randzone (24) abgekehrten Seite des Ablenkkeils (27, 28) im wesentlichen parallel zur optischen Achse (11) verläuft.

5. Kamera nach Anspruch 3 und 4, d a d u r c h g e - k e n n z e i c h n e t , daß die weiteren optischen Ab- und/oder Umlenkelemente (29, 30) zwei Umlenkspiegel (32, 34, 33, 35) mit zueinander im wesentlichen rechtwinklig stehenden Umlenkrichtungen und vorzugsweise eine zwischen dem Ablenkkeil (27, 28) und dem einen Umlenkspiegel (32, 33) angeordnete Linse (36, 37) und eine zwischen den beiden Umlenkspiegeln angeordnete Relais- Linse (37, 38) aufweisen.

6. Kamera nach Anspruch 5, d a d u r c h g e k e n n - z e i c h n e t , daß in beiden Teilstrahlengängen (21, 22) jeweils dem letzten Umlenkspiegel (34, 35) der optische Körper (23) nachgeordnet ist.

7. Kamera nach Anspruch 6, d a d u r c h g e k e n n - z e i c h n e t , daß der optische Körper (23) ein Spiegel- oder Prismenpaar (40) zur Schnittbildvereinigung der beiden Teilstrahlengänge (21, 22) aufweist.

8. Kamera nach Anspruch 2 oder 3, d a d u r c h   g e -
k e n n z e i c h n e t , daß das an der Randzone (24)
angeordnete Umlenkelement (25, 26) als Umlenkspiegel
(52, 53) ausgebildet ist.

9. Kamera nach Anspruch 3 und 8, d a d u r c h   g e -
k e n n z e i c h n e t , daß die weiteren optischen
Ab- und/oder Umlenkelemente (29, 30) einen zwischen dem
Umlenkspiegel (52, 53) und dem optischen Körper (23)
angeordneten weiteren Umlenkspiegel (54, 55) aufweisen.

10. Kamera nach Anspruch 9, d a d u r c h   g e k e n n -
z e i c h n e t , daß der optische Körper (23) ein
Dodinkeilpaar (58) zur Schnittbildvereinigung der beiden
Teilstrahlengänge (21, 22) aufweist.

Fig. 1

Fig. 3a

Fig. 3b

Fig. 2

Fig. 4

Fig. 5a

Fig. 5b

0016902

Fig. 6

0016902

Fig. 7

Fig. 8a

Fig. 8b

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | **US - A - 3 003 407** (D.S. GREY)<br>* Spalte 3, Zeilen 41-75; Spalten 4-6; Figuren 1-13 *<br><br>---- | 1-3,<br>5-7,9 |

**KLASSIFIKATION DER ANMELDUNG (Int.Cl. 3)**

G 03 B 13/20
        19/04

**RECHERCHIERTE SACHGEBIETE (Int. Cl. 3)**

G 03 B 13/00
        13/16
        13/20
        19/00
        19/02
        19/04
        19/12

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Den Haag | 25-06-1980 | BOEYKENS |

EPA form 1503.1   06.78